# FASCICULE DE BREVET EUROPEEN

(11) **EP 4 577 456 B1**
(45) Date de publication et mention de la délivrance du brevet: **30.09.2026**
(21) Numéro de dépôt: 23762254.3
(22) Date de dépôt: 11.08.2023
(51) Int. Cl.: B64G 1/64

(54) **DISPOSITIF DE SÉPARATION À GOUJON D'ARRIMAGE AMORTI**
TRENNVORRICHTUNG MIT GEDÄMPFTEM ZURRBOLZEN
SEPARATION DEVICE WITH DAMPED LASHING STUD

(30) Priorité: 23.08.2022 FR 2208462
(43) Date de publication de la demande: 02.07.2025
(73) Titulaire: ARIANEGROUP SAS, 78130 Les Mureaux (FR)
(72) Inventeur: GLAVIER, Ludovic, 78130 Les Mureaux (FR)
(74) Mandataire: Cabinet Beau de Loménie
(86) Numéro de dépôt international: PCT/FR2023/051263
(87) Numéro de publication internationale: WO 2024/042287

(56) Documents cités:
- CN-B- 109 080 858
- US-A- 5 603 595
- US-A1- 2021 094 707
- US-B1- 6 939 073

## Description

### Domaine Technique

La présente invention se rapporte aux systèmes de séparation entre deux parties ou éléments structurels et plus particulièrement à ceux munis de goujons d'arrimage dont la rupture pyrotechnique ou non des écrous de séparation permet leur rétractation dans une des deux parties.

### Technique antérieure

Dans les systèmes de séparation actuels, le choc résultant de la séparation nécessite d'être absorbé pour éviter que le goujon ne transperce la coiffe (bolt catcher) dans laquelle il est enfermé. Une solution classique consiste à prévoir dans cette coiffe une sorte de cage crantée pour réduire la vitesse du goujon au fur et à mesure de son avancée et interdire son retour en arrière.

Si une telle solution donne globalement satisfaction, elle s'avère inadaptée aux constellations de satellites qui, pour assurer des liaisons HRS ponctuelles (Hold down and Release System) qu'impliquent de telles constellations, nécessitent des goujons de fort diamètre (supérieur à 20 mm) et de masse conséquente (supérieur à 1Kg) et surtout devant se rétracter très rapidement (en moins de 20ms), tous critères de performance inatteignables à ce jour avec les dispositifs de séparation de l'état de l'art. On connaît également US 6 939 073, US 5 603 595 et US 2021/094707 qui divulguent des dispositifs de séparation.

### Exposé de l'invention

La présente invention a donc pour but principal de répondre aux critères de performance précités en proposant un dispositif de séparation d'une seconde partie d'une première partie, comportant une première interface destinée à être fixée à la première partie et une seconde interface destinée à être fixée à la seconde partie, un goujon d'arrimage traversant les première et seconde interfaces et étant maintenu à la première interface par un écrou de séparation et à la seconde interface par un premier ensemble écrou/contre-écrou, le goujon d'arrimage étant recouvert d'une coiffe solidaire de la seconde interface et destinée à le recevoir une fois l'écrou de séparation rompu et les premières et seconde interfaces séparées, caractérisé en ce qu'il comporte un ressort de rétractation pour extraire le goujon d'arrimage de la première interface, le propulser vers un matériau amortisseur disposé en fond de coiffe et l'y maintenir par sa seule force de maintien résiduelle.

Ainsi, le goujon d'arrimage est parfaitement amorti en fond de coiffe et dans un temps particulièrement réduit et peut y rester pendant toute la durée de vie de la partie séparée.

De préférence, le ressort de rétractation est précontraint entre la seconde interface et un capot métallique en butée sur une rondelle solidaire du goujon d'arrimage par un second ensemble écrou/contre-écrou.

Avantageusement, le ressort est en inox et le capot métallique en aluminium.

De préférence, le matériau amortisseur est un matériau élastoplastique ou viscoélastique.

Avantageusement, le matériau amortisseur est une mousse métallique ou polyuréthane.

De préférence, le goujon d'arrimage est en Inconel et présente un diamètre supérieur à 20 mm.

Avantageusement, la coiffe est solidarisée à la seconde interface par vissage ou collage.

De préférence, l'écrou du premier ensemble écrou/contre-écrou intègre une rondelle à sa base.

Avantageusement, chacune des première et seconde interfaces peut aligner 1 à 3 goujons d'arrimage.

De préférence, la première partie est un lanceur et la seconde partie au moins un satellite.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur les lesquels :
[Fig. 1] la figure 1 illustre un dispositif de séparation à goujon d'arrimage conforme à l'invention avant la séparation,
[Fig. 2] la figure 2 montre illustre un dispositif de séparation à goujon d'arrimage conforme à l'invention après la séparation,
[Fig. 3] la figure 3 montre la variation d'énergie cinétique dans le goujon d'arrimage en fonction du temps, et
[Fig. 4] la figure 4 montre la variation de la vitesse du goujon d'arrimage en fonction du temps.

### Description des modes de réalisation

Le principe de l'invention repose sur la conversion de l'énergie cinétique en énergie de déformation et la dissipation d'énergie lors de la séparation d'un goujon d'arrimage retenant ensemble deux parties et sur le maintien en position de ce goujon d'arrimage une fois la séparation effectuée.

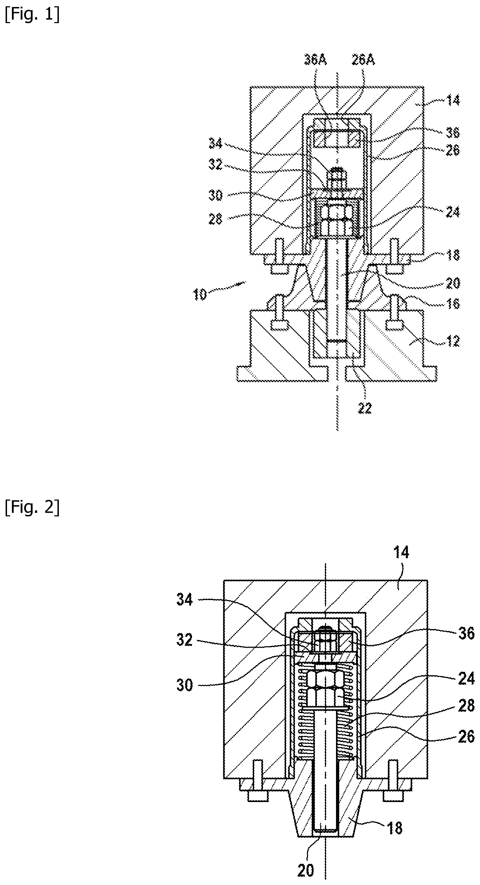

La figure 1 illustre un schéma de principe d'un dispositif de séparation 10 conforme à l'invention avant la séparation d'une seconde partie d'une première partie. La figure 2 illustre ce même dispositif après la séparation. La première partie 12 est avantageusement un lanceur et la seconde partie 14 un ou plusieurs satellites.

Le dispositif de séparation comporte première interface 16 destinée à être fixée à la première partie 12 et une seconde interface 18 destinée à être fixée à la seconde partie 14. Un goujon d'arrimage 20 traverse les première et seconde interfaces et est maintenu à la première interface par un écrou de séparation 22, de préférence pyrotechnique, et à la seconde interface par un premier ensemble écrou/contre-écrou 24. Le goujon d'arrimage est recouvert d'une coiffe 26 solidaire de la seconde interface 18, par exemple par vissage et/ou collage, et destinée à recevoir ce goujon d'arrimage une fois l'écrou de séparation 22 rompu et donc les premières et seconde interfaces séparées l'une de l'autre. En pratique et selon les parties à séparer, le dispositif de séparation peut comporter un ou plusieurs goujons d'arrimage disposés sur une ou deux lignes. Par exemple, trois goujons d'arrimage alignés sont suffisants pour maintenir un satellite de un à deux mètres de diamètre sur son lanceur.

Selon l'invention, un ressort de rétractation 28 est monté autour du goujon d'arrimage 20 entre la seconde interface 18 sur laquelle sa première extrémité vient en appui et un capot métallique 30 dans lequel sa seconde extrémité vient s'insérer. Le capot métallique comporte un orifice central pour permettre le passage du goujon d'arrimage sur lequel est enfilée une rondelle 32 solidarisée à ce goujon d'arrimage par un second ensemble écrou/contre-écrou 34 et constituant une butée pour le capot métallique (la rondelle peut aussi être directement intégrée à l'écrou de ce second ensemble). Le ressort de rétractation peut ainsi être précontraint pour permettre une extraction automatique du goujon d'arrimage de la première interface 16 après rupture de l'écrou de séparation 22 et sa propulsion vers un matériau amortisseur 36 fixé avantageusement par collage sur le fond de la coiffe 26 et l'y maintenir.

Comme le montre aussi la figure 2, le matériau amortisseur ainsi que le fond de coiffe sont percés d'un orifice 26A, 36A, pour recevoir le second ensemble écrou/contre-écrou 34 lorsque le capot métallique vient en butée sur le matériau amortisseur.

Pour faciliter le montage des premier et second ensembles écrou/contre-écrou, le goujon d'arrimage, de préférence en titane, présente avantageusement un premier diamètre (typiquement supérieur à 20 mm, par exemple de 24 à 28 mm) sur sa partie traversant les première et seconde interfaces et recevant le premier ensemble écrou/contre-écrou 24 et un second diamètre, plus petit (typiquement de 12 à 14 mm), sur sa partie au-delà de ce premier ensemble, recevant le second ensemble écrou/contre-écrou 34 et allant jusqu'à sa partie terminale. Le second diamètre peut également être un trou taraudé recevant une vis d'assemblage.

Le ressort de rétractation est avantageusement réalisé en inox et le capot métallique en aluminium. Le matériau amortisseur peut être un matériau élastoplastique, par exemple une mousse métallique (aluminium, alliages de cuivre, etc...), ou un matériau viscoélastique, par exemple une mousse polyuréthane.

Le fonctionnement du dispositif de l'invention est le suivant. Tout d'abord, la séparation du satellite est réalisée par la libération du goujon d'arrimage par l'écrou de séparation. Puis, le ressort de rétractation extrait le goujon d'arrimage de l'écrou pour le loger dans la coiffe (le bolt catcher). Lorsque le goujon est dans le fond de la coiffe, une force de maintien résiduelle dans le ressort de rétractation permet de maintenir le goujon dans la coiffe durant la vie du satellite. Il y a un impact créant un choc lorsque le goujon atteint le fond de la coiffe, c'est pourquoi, un matériau permettant d'amortir ce choc à l'impact du goujon est placé dans le fond de la coiffe.

Des essais ont été menés dans le cadre de la séparation d'un satellite d'un lanceur avec un goujon d'arrimage de 1,42 kg et une vitesse d'impact de 6,62 m/s, soit une énergie de 32 J à absorber.

Le ressort de rétractation a une raideur de 12 N/mm avec une longueur à vide de 180 mm, et il est utilisé dans l'intervalle de 90 mm (longueur avant séparation) à 50 mm (longueur après séparation). La force de tension résiduelle de maintien du goujon d"arrimage après séparation est de 600 N.

Le matériau amortisseur employé est une mousse polyuréthane. Ce matériau permet de bien amortir le choc et donc d'atteindre de très faible niveau de choc. A titre indicatif, on obtient une accélération de 1000 m/s² pour une fréquence d'environ 2500 Hz. Généralement, le seuil critique de choc pour ne pas endommager de systèmes adjacents est N₀._{8f} = 0.8*f*9.81 en m/s², soit 19620 m/s².

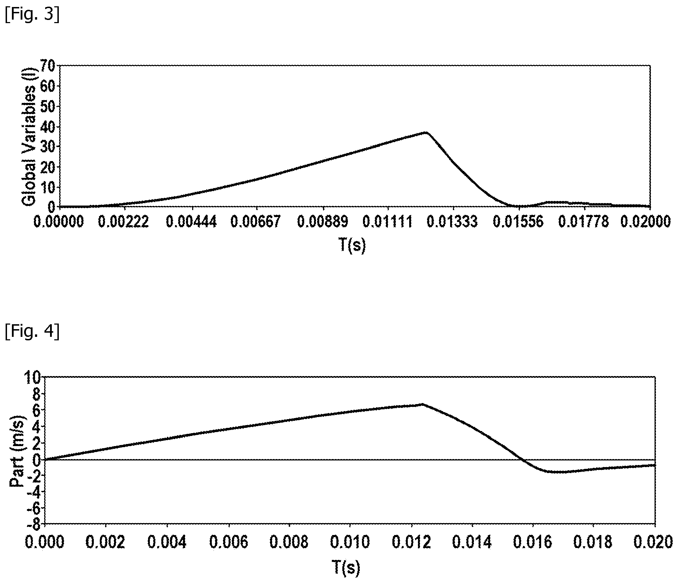

Les figures 3 et 4 montrent respectivement la variation d'énergie cinétique dans le goujon et celle de la vitesse du goujon en fonction du temps. Les courbes d'énergie et de vitesse tendent toutes deux vers zéro, ce qui démontre que le goujon est bien en position stable et à vitesse nulle dans le fond de la coiffe.

## Revendications

1. Dispositif (10) de séparation d'une seconde partie (14) d'une première partie (12), comportant une première interface (16) destinée à être fixée à la première partie et une seconde interface (18) destinée à être fixée à la seconde partie, un goujon d'arrimage (20) traversant les première et seconde interfaces et étant maintenu à la première interface par un écrou de séparation (22) et à la seconde interface par un premier ensemble écrou/contre-écrou (24), le goujon d'arrimage étant recouvert d'une coiffe (26) solidaire de la seconde interface et destinée à le recevoir une fois l'écrou de séparation rompu et les premières et seconde interfaces séparées, le dispositif comportant un ressort de rétractation (28) pour extraire le goujon d'arrimage de la première interface, le propulser vers un matériau amortisseur fixé en fond de coiffe et l'y maintenir par sa seule force de maintien résiduelle, le dispositif étant **caractérisé en ce que** le goujon d'arrimage présentant un premier diamètre sur sa partie traversant les première et seconde interfaces et recevant le premier ensemble écrou/contre-écrou et un second diamètre, plus petit, sur sa partie au-delà de ce premier ensemble, allant jusqu'à sa partie terminale, le second diamètre recevant un second ensemble écrou/contre-écrou (34) ou étant un trou taraudé recevant une vis d'assemblage.

2. Dispositif de séparation selon la revendication 1, dans lequel le second diamètre reçoit le second ensemble écrou/contre-écrou (34), et dans lequel le ressort de rétractation (28) est précontraint entre la seconde interface (18) et un capot métallique (30) en butée sur une rondelle (32) solidaire du goujon d'arrimage par le second ensemble écrou/contre-écrou.

3. Dispositif de séparation selon la revendication 2, dans lequel le ressort est en inox et le capot métallique en aluminium.

4. Dispositif de séparation selon l'une quelconque des revendications 1 à 3, dans lequel le matériau amortisseur est un matériau élastoplastique ou viscoélastique.

5. Dispositif de séparation selon l'une quelconque des revendications 1 à 3, dans lequel le matériau amortisseur est une mousse métallique ou polyuréthane.

6. Dispositif de séparation selon l'une quelconque des revendications 1 à 5, dans lequel le goujon d'arrimage est en superalliage base nickel et présente un diamètre supérieur à 20 mm.

7. Dispositif de séparation selon l'une quelconque des revendications 1 à 6, dans lequel la coiffe (26) est solidarisée de la seconde interface (18) par vissage ou collage.

8. Dispositif de séparation selon l'une quelconque des revendications 1 à 7, dans lequel l'écrou du premier ensemble écrou/contre-écrou (24) intègre une rondelle à sa base.

9. Dispositif de séparation selon l'une quelconque des revendications 1 à 8, dans lequel chacune des première et seconde interfaces peut aligner un à trois goujons d'arrimage.

10. Ensemble comprenant un dispositif de séparation selon l'une quelconque des revendications 1 à 9, la première partie laquelle est un lanceur (12) et la seconde partie laquelle est au moins un satellite (14).

## Patentansprüche

1. Vorrichtung (10) zur Trennung eines zweiten Teils (14) von einem ersten Teil (12), die eine erste Schnittstelle (16), die dazu bestimmt ist, an dem ersten Teil befestigt zu werden, und eine zweite Schnittstelle (18) beinhaltet, die dazu bestimmt ist, an dem zweiten Teil befestigt zu werden, wobei ein Verankerungsbolzen (20) die erste und die zweite Schnittstelle durchquert und an der ersten Schnittstelle durch eine Trennungsmutter (22) und an der zweiten Schnittstelle durch eine erste Mutter-/Kontermutter-Anordnung (24) gehalten wird, wobei der Verankerungsbolzen von einer Haube (26) bedeckt ist, die mit der zweiten Schnittstelle fest verbunden und dazu bestimmt ist, ihn aufzunehmen, wenn die Trennungsmutter gebrochen ist und die erste und die zweite Schnittstelle getrennt sind,
wobei die Vorrichtung eine Rückholfeder (28) beinhaltet, um den Verankerungsbolzen aus der ersten Schnittstelle herauszuziehen, ihn gegen ein Dämpfungsmaterial zu drücken, das am Boden der Haube befestigt ist und ihn dort allein durch ihre Resthaltekraft zu halten,
wobei die Vorrichtung **dadurch gekennzeichnet ist, dass** der Verankerungsbolzen einen ersten Durchmesser an seinem Teil aufweist, der die erste und die zweite Schnittstelle durchquert und die erste Mutter-/Kontermutter-Anordnung aufnimmt, und einen zweiten kleineren Durchmesser an seinem Teil, der über diese erste Anordnung hinausragt und bis zu seinem Endteil geht, wobei der zweite Durchmesser eine zweite Mutter-/Kontermutter-Anordnung (34) aufnimmt oder ein Gewindeloch ist, das eine Montageschraube aufnimmt.

2. Vorrichtung zur Trennung nach Anspruch 1, wobei der zweite Durchmesser die zweite Mutter-/Kontermutter-Anordnung (34) aufnimmt, und wobei die Rückholfeder (28) zwischen der zweiten Schnittstelle (18) und einer Metallabdeckung (30) vorgespannt ist, die gegen eine Unterlegscheibe (32) anliegt, die durch die zweite Mutter-/Kontermutter-Anordnung fest mit dem Verankerungsbolzen verbunden ist.

3. Vorrichtung zur Trennung nach Anspruch 2, wobei die Feder aus rostfreiem Stahl besteht und die Metallabdeckung aus Aluminium.

4. Vorrichtung zur Trennung nach einem der Ansprüche 1 bis 3, wobei das Dämpfungsmaterial ein elastoplastisches oder viskoelastisches Material ist.

5. Vorrichtung zur Trennung nach einem der Ansprüche 1 bis 3, wobei das Dämpfungsmaterial ein Metall- oder Polyurethanschaum ist.

6. Vorrichtung zur Trennung nach einem der Ansprüche 1 bis 5, wobei der Verankerungsbolzen aus einer Superlegierung auf Nickelbasis besteht und einen Durchmesser von mehr als 20 mm aufweist.

7. Vorrichtung zur Trennung nach einem der Ansprüche 1 bis 6, wobei die Haube (26) mit der zweiten Schnittstelle (18) durch Verschrauben oder Verkleben fest verbunden ist.

8. Vorrichtung zur Trennung nach einem der Ansprüche 1 bis 7, wobei die Mutter der ersten Mutter-/Kontermutter-Anordnung (24) eine an ihrer Basis integrierte Unterlegscheibe aufweist.

9. Vorrichtung zur Trennung nach einem der Ansprüche 1 bis 8, wobei jede der ersten und der zweiten Schnittstelle einen bis drei Verankerungsbolzen ausrichten kann.

10. Anordnung umfassend eine Vorrichtung zur Trennung nach einem der Ansprüche 1 bis 9, wobei der erste Teil eine Trägerrakete (12) ist und der zweite Teil zumindest ein Satellit (14) ist.

## Claims

1. A device (10) for separating a second part (14) from a first part (12), including a first interface (16) intended to be fixed to the first part and a second interface (18) intended to be fixed to the second part, a docking stud (20) passing through the first and second interfaces and being held at the first interface by a separation nut (22) and at the second interface by a first nut/locknut assembly (24), the docking stud being covered with a cap (26) secured to the second interface and intended to receive it once the separation nut has broken and the first and second interfaces have been separated, the device including a retraction spring (28) for extracting the docking stud from the first interface, propelling it towards a damping material fixed at the bottom of the cap and holding it there by its residual holding force alone, the device being **characterized in that** the docking stud having a first diameter on its part passing through the first and second interfaces and receiving the first nut/locknut assembly and a second smaller diameter on its part beyond this first assembly, extending up to its terminal part, the second diameter receiving a second nut/locknut assembly (34) or being a tapped hole receiving an assembly screw.

2. The separation device according to claim 1, wherein the second diameter receives the second nut/locknut assembly (34), and wherein the retraction spring (28) is pre-stressed between the second interface (18) and a metal cover (30) in abutment on a washer (32) secured to the docking stud by the second nut/locknut assembly.

3. The separation device according to claim 2, wherein the spring is made of stainless steel and the metal cover is made of aluminum.

4. The separation device according to any one of claims 1 to 3, wherein the damping material is an elastoplastic or viscoelastic material.

5. The separation device according to any one of claims 1 to 3, wherein the damping material is metal or polyurethane foam.

6. The separation device according to any one of claims 1 to 5, wherein the docking stud is made of nickel-based superalloy and has a diameter greater than 20 mm.

7. The separation device according to any one of claims 1 to 6, wherein the cap (26) is secured to the second interface (18) by screwing or bonding.

8. The separation device according to any one of claims 1 to 7, wherein the nut of the first nut/locknut assembly (24) integrates a washer at its base.

9. The separation device according to any one of claims 1 to 8, wherein each of the first and second interfaces can align one to three docking studs.

10. The separation device according to any one of claims 1 to 9, wherein the first part is a launcher (12) and the second part is at least one satellite (14).
